(19) **Europäisches Patentamt**

**European Patent Office**

**Office européen des brevets**

(11) **EP 1 175 019 B1**

(12) **EUROPEAN PATENT SPECIFICATION**

(45) Date of publication and mention
of the grant of the patent:
**17.03.2004 Bulletin 2004/12**

(51) Int Cl.⁷: **H04B 1/707**

(21) Application number: **00114996.2**

(22) Date of filing: **21.07.2000**

(54) **RAKE receiver for a CDMA system, in particular incorporated in a cellular mobile phone**

RAKE-Empfänger für ein CDMA System, insbesondere in einem zellularen Mobiltelefon

Récepteur de type RAKE pour un système à AMRC, en particulier dans appareil téléphonique mobile et cellulaire

(84) Designated Contracting States:
**DE FR GB IT**

(43) Date of publication of application:
**23.01.2002 Bulletin 2002/04**

(73) Proprietor: **STMicroelectronics N.V.**
**1077 XX Amsterdam (NL)**

(72) Inventor: **Berens, Friedbert**
**1202 Geneva (CH)**

(74) Representative: **Dossmann, Gérard**
**Bureau D.A. Casalonga-Josse**
**Paul-Heyse-Strasse 33**
**80336 München (DE)**

(56) References cited:
**EP-A- 0 851 600**       **US-A- 5 764 687**
**US-A- 5 764 688**

**Description**

The invention relates in general to the field of wireless communication systems, and more particularly to the CDMA systems such as the different CDMA based mobile radio systems like CDMA 2000, WCDMA (Wide Band CDMA) or the IS-95 standard.

In a wireless communication system, a central base station communicates with a plurality of remote terminals, such as cellular mobile phones. Frequency-Division Multiple Access (FDMA) and Time-Division Multiple Access (TDMA) are the traditional multiple access schemes to provide simultaneous services to a number of terminals. The basic idea behind FDMA and TDMA technics is to slice the available resource into multiple frequency or time slots, respectively, so that multiple terminals can be accomodated without causing interference.

Contrasting these schemes with separate signals in frequency or time domains, Code-Division Multiple Access (CDMA) allows multiple users to share a common frequency and time channel by using coded modulation.

More precisely, as it is well-known by the man skilled in the art, a scrambling code which is a long pseudo noise code sequence, is associated with each base station and permits to distinguish the base stations from each other. Further, an orthogonal code, known by the man skilled in the art under the denomination of OVSF (orthogonal variable spreading factor) code, is allocated to each remote terminal (such as cellular mobile phone). All these OVSF codes are orthogonal with each other, which permits to distinguish a remote terminal from another.

Before emitting a signal on the transmission channel towards a remote terminal, the signal has been scrambled and spreaded by the base station using the scrambling code of the base station and the OVSF code of the remote terminal.

Because of possible reflections of the initial transmitted signal on obstacles between the base station and the remote terminal, the transmission channel is in fact a multipath transmission channel. As a result, the signal which is received by remote terminal includes different time shifted versions of the initial transmitted signal which are the results of the multipath transmission characteristics of the mobile radio channel. Each path introduces a different time delay.

A remote terminal, which operates in a CDMA communication system, comprises a so-called "Rake receiver". A Rake receiver is adapted for time aligning, descrambling, despreading, and combining the delayed versions of the initial signals, in order to deliver the data stream contained in the initial signals.

The terminology, "N-finger", indicates that the maximum number of paths that can be combined in such a receiver is N.

After having been processed by a front end radio frequency stage, and converted in an analog-to-digital converter, the received signal is constituted of a succession of chips oversampled with a predetermined oversampling factor, thus forming an input sequence of samples.

One known solution for implementing the time aligning and descrambling operations consists in storing the input sequence of samples in a delay chain having a length determined by the maximum delay spread of the multipath channel. Said maximum delay spread is determined for the worst case. Then, for each path of the channel, one of the output of the delay chain is selected, depending on the delay value of said path. The selected output signal is then multiplied by the scrambling code of the base station.

However, such a solution is hardware consuming since one multiplier is implemented for each path. Further, a large amount of input memory is needed since it is necessary to take into account the maximum delay spread in the worst case together with the resolution of the analog-to-digital converters.

Another solution consists in using, for each path, a delayed version of the scrambling code of the base station. According to this solution, it is necessary to either implement a different scrambling code generator for each path, or to use a memory storing all the delayed scrambling codes for all the paths. However, it is difficult to implement independent scrambling code generators for each of the fingers. And, if a memory is used for storing all the delayed scrambling codes for all the paths, the addressing scheme of this memory is rather complicated and furthermore, must be modified, if during the transmission, one delay value of one path changes. At last, the implementation of this solution is even more complicated when several scrambling codes associated with several base stations must be taken into account in the Rake receiver.

Prior art can be found in US-A-5 764 687, EP-A-851 600 and US-A-5 764 688.

The invention is intended to provide a solution to this problem.

One aim of the invention is to provide a Rake receiver with a time aligning and descrambling unit having a rather simple and flexible hardware structure.

The invention proposes a digital N-finger Rake receiver for a CDMA system comprising:

- input means for receiving a digital scrambled and spreaded signal, constituted of chips having a duration Tc, oversampled with an oversampling factor Ns and including delayed versions of at least one initial signal scrambled with at least one scrambling code, spreaded with at least one orthogonal code and transmitted by at least one emitter on a multipath transmission channel having a predetermined maximum delay spread Ds,

- estimation means connected to the input means for estimating the number of paths of the channel and their different time delay values (which are theoritically respectively equal to multiples of Tc/Ns), and,
- processing means for time-aligning, descrambling, despreading, combining said delay versions and delivering the data stream contained in the initial signal.

According to a general feature of the invention, the processing means comprise a time aligning and descrambling unit including:

- a first delay chain connected to the input means and having N1 first outputs, N1 being equal to at least Ns + 1, the delay value between two adjacent first inputs being equal to Tc/Ns,
- a phase controllable scrambling code generator for generating the scrambling code of the initial signal,
- a second delay chain connected to the output of the scrambling code generator and having 1 + Ds/Tc second outputs, the delay value between two adjacent second outputs being equal to Tc,
- first controllable selection means for selecting, for each path, one of the first outputs in response to a first control signal,
- second controllable selection means for selecting, for each path, one of the second outputs in response to a second control signal,
- an output module including main multiplication means for multiplying, for each path, the elementary signal present at the selected first output with the elementary signal present at the selected second output, and
- control means for successively delivering said first and second control signals for each path according to the time delay value of said considered path.

With such an implementation according to the invention, the stored samples of the received signal, which are stored in the first delay chain, are used for the fine timing adjustment of the descrambling unit. Since the minimum number of first outputs is equal to Ns + 1, the memory size of the delay chain can be considerably reduced.
The oversampling factor Ns can be directly the oversampling factor of the A/D converters. However, if the oversampling factor of the A/D converters is not considered as being enough, the samples delivered by the A/D converters can be interpolated in order to obtain a greater number of samples. In such a case, the oversampling factor Ns is considered as being the final oversampling factor after interpolation.
Further, even if the length of the second delay chain depends on the maximum delay spread, the delay value between two adjacent second output is equal to Tc and not to Tc/Ns, which leads to a length less important than a length of a first delay chain which would be calculated on the basis of the maximum delay spread as in the prior art.
Further, because the scrambling codes are generally composed of BPSK codes which can be defined by only one bit, the memory size of the elements constituting this second delay chain can be reduced. Each of the element can be realized for example by one bit Flip-Flop (in fact two bits flip-flop for taking into account the I stream and the Q stream). The size of the shift register constituting the second delay chain is thus smaller than the size of the shift register constituting the first delay chain, which depends on the resolution of the analog-to-digital converters.
And, according to the invention, by controlling the two selection means (which can be realized by multiplexers), the delayed versions of the received signal can multiplied with an arbitrary scrambling code having an arbitrary phase. And, during one chip period for each path to be processed, only one multiplication is performed which can be implemented for example by only one multiplier.
At last, because the scrambling code generator is phase controllable (the phase of the generator can be for example delayed or enhanced by controlling the input clock of the generator), it is possible to flexibly adapt the receiver time window to the variable delay spread.
Although the number N1 can be equal to Ns + 1, it can be preferably equal to at least 2Ns + 1 which permits also a flexible fine timing adjustment of the descrambling unit, in order for example to take into account negative delay values which can occur during the transmission.
According to an embodiment of the invention, which contributes to obtain said flexible adaptation of the receiver time window, said control means determine the difference between the greatest time delay value and the smallest time delay value among all the time delay values of the paths, and the path associated with the smallest time delay value is considered as a reference path. Said control means are thus adapted to select for this reference path, one specific first output of the first chain and one specific second output of the second chain, depending on said difference (for example said first and second specific outputs can be located if possible near the middle of the first and second delay chains). The other selected first and second outputs associated to the other paths are determined in relation to said first and second specific outputs.
In such a case, if during the transmission, a new delay value becomes smaller than the smallest delay value (such a new delay value can be thus considered as being a negative relative delay value with respect to the delay value of the reference path), one of the outputs located before the first or second specific outputs can be selected for this new delay value.

According to one embodiment of the invention, the first delay chain is a chain composed of (N1 - 1) first delay elements, each of which having an elementary delay value of Tc/Ns, and clocked by a first clock signal having a period of Tc/Ns.

The second delay chain can be also a chain composed of Ds/Tc second delay elements, each of which having an elementary delay value of Tc, and clocked by a second clock signal having a period of Tc.

According to an embodiment of the invention, in which the multiplication performed during one chip period for each path to be processed, is implemented with only one multiplier, the control means are adapted to respectively successively deliver the first and second control signals associated to the corresponding paths at a frequency of N/Tc.

Further, the first controllable selection means comprise a first register connected to said first outputs of the first delay chain and clocked with a first register clock signal having a period of Tc, and a first multiplexer connected between the first register and one output of the main mutiplication means and successively controlled by said first control signals.

By analogy, the second controllable selection means comprise a second register connected to said second outputs of the second delay chain and clocked with a second register clock signal having a period of Tc, and a second multiplexer connected between the second register and another input of the main multiplication means, and successively controlled by said second control signals.

The main multiplication means comprise a single multiplier, and, the output module further comprises a demultiplexer connected to the output of the main multiplication means, having N outputs and controlled by a demultiplexer control signal at a frequency of N/Tc.

However, for lower speed requirements of the main multiplication means, several multipliers can be implemented in parallel.

More precisely, according to such a "lower speed" embodiment, said control means are adapted to respectively deliver the first and second control signals associated to the corresponding paths at a frequency N/MTc, and the main multiplication means comprise M parallel multipliers. The output module further comprises a demultiplexer connected to the output of the main multiplication means, having N outputs, and controlled by demultiplexer control signal at a frequency of N/MTc.

In a CDMA system, the received signal may include delayed version of different initial signals respectively scrambled with different scrambling codes respectively associated with different emitters. In such a case, according to an embodiment of the invention, the time-aligning and descrambling unit comprises different scrambling code generators, and different second delay chains, respectively receiving said different scrambling codes. Each second delay chain has 1 + Ds/Tc second outputs and a delay value between two adjacent second outputs equal to Tc.

According to an embodiment of the invention, the estimation means are further adapted to estimate the impulse response of each path. The processing means further comprise a despreading and combining unit connected to the output module of the time aligning and descrambling unit and to the estimation means. And, said deaspreading and combining units comprises storage means for storing said orthogonal code, and supplementary multiplication means connected to the main multiplication means and adapted for multiplying the signals delivered by the output module of the time aligning and descrambling unit with said orthogonal code.

The invention proposes also a digital information receiver device in particular, a cellular mobile phone, incorporating a Rake receiver as defined above.

Other advantages and features of the invention will appear on examining the detailed description of embodiments, these being in no way limiting and of the appended drawings in which:

Figure 1 illustrates very diagrammatically a cellular mobile phone according to the invention incorporating a Rake receiver according to the invention,

Figure 2 illustrates more in details but still very diagrammatically the main means of a Rake receiver according to the invention,

Figure 3 illustrates more in details but still diagrammatically an embodiment of an internal structure of the Rake receiver of figure 2,

Figures 4a-4c illustrate diagrammatically an example of a scrambling code as well as a corresponding scrambled signal,

Figure 5 illustrates still diagrammatically an embodiment of a scrambling code generator implemented in a Rake receiver according to the invention,

Figure 6 illustrates very diagrammatically an example of operation of a time aligning and descrambling unit incorporating in a Rake receiver according to the invention, and,

Figure 7 illustrates diagrammatically an another embodiment of multiplication means incorporated in a time aligning and descrambling unit of a Rake receiver according to the invention.

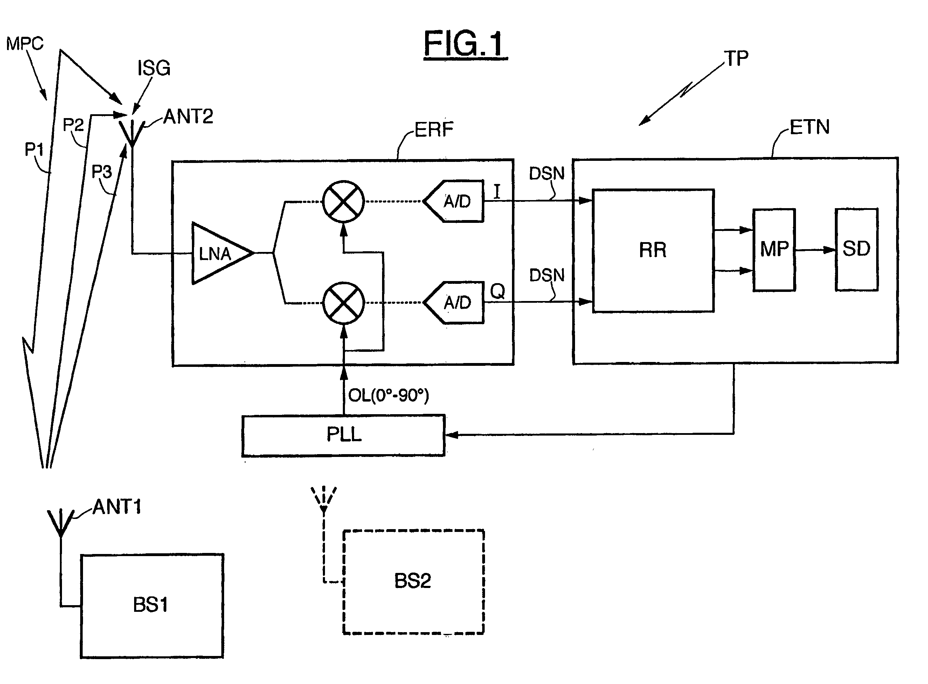

In Figure 1, the reference TP denotes a remote terminal such as a cellular mobile phone which is in communication with a base station BS1. The mobile phone TP comprises, conventionally, an analog radio frequency front end stage ERF connected to an antenna ANT2 for receiving an input signal ISG.

Conventionally, the stage ERF comprises a low noise amplifier LNA and two processing channels including mixers and conventional filters and amplifiers (not shown). The two mixers receive respectively from a phase locked loop PLL two signals, having mutually a phase difference of 90°. After frequency transposition in the mixers, the two processing channels define respectively two streams I and Q as it is well known by the man skilled in the art. After digital conversion into analog-to-digital converters A/D, the two digital streams I and Q are delivered to a digital processing stage ETN.

This digital stage ETN comprises a Rake receiver RR followed by conventional demapping means MP (demodulation means) which perform the demodulation of the constellation delivered by the Rake receiver. The stage ETN comprises also conventionally a source decoder SD which performs a source decoding well-known by the man skilled in the art.

At last, as it is also well-known by the man skilled in the art, the phase locked loop PLL is controlled by an automatic frequency control algorithm incorporated in a processor of the stage ETN.

The received signal ISG results from the transmission of an initial signal by the antenna ANT1 of the base station BS1 on a multipath channel transmission MPC. In the present embodiment, it is assumed that the mobile phone TP receives a signal from base station BS1 only. But of course, the received signal ISG could also result from the transmission of initial signals respectively emitted by several different base stations BS1 and BS2.

Because of possible reflections of the signal on obstacles located between the base station BS1 and the mobile phone TP, the transmission channel MPC comprises several different transmission paths (here three paths P1, P2, P3 are shown).

As it is well known by the man skilled in the art, before transmission through the antenna ANT1, the initial signal containing the data (symbols) is scrambled and spreaded by the processing means of the base station BS1, by using the scrambling code of the base station and the orthogonal code (OVSF code) of the phone TP. Consequently, the symbols are transformed into chips having a predetermined length Tc (for example equal to 260 ns), corresponding to a predetermined chip rate (of 3.84 Mcps for example). The chip rate is greater than the data or symbol rate. For example, one symbol can be transformed into 4 to 256 chips.

The initial signal constituted of chips is then filtered in a matched filter before analog conversion and transmission through antenna ANT1.

After analog-to-digital conversion in the A/D converters of the phone TP, the signal (complex signal constituted of the two streams I and Q) is a digital scrambled and spreaded signal constituted of chips, oversampled with an oversampling factor Ns (Ns = 4 for example). This digital signal DSN includes delayed versions of the initial scrambled and spreaded signal transmitted by the base station.

Each path introduces a different time delay $\tau_1$, $\tau_2$, $\tau_3$.

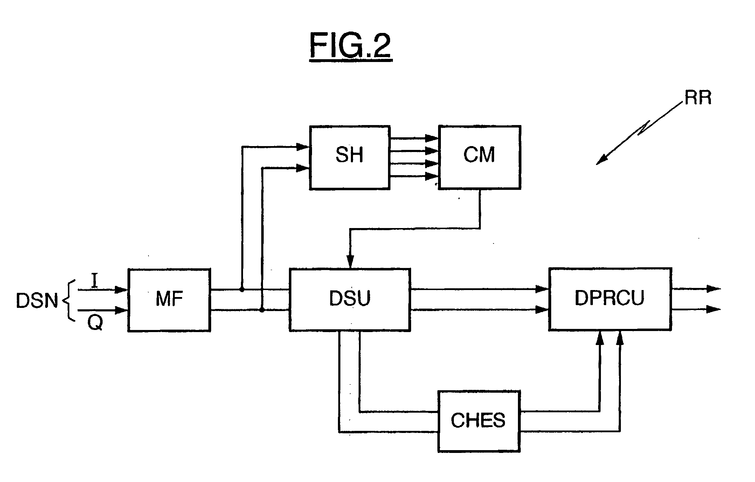

Referring now to figure 2, the Rake receiver RR comprises input means for receiving said digital signal DSN. The input means comprise in particular a matched filter MF. The time delays $\tau_i$ of the different paths of the multipath channel are estimated by a searcher SH and can be tracked by a tracking unit (digital locked loop for example). The structure of the searcher and the tracking unit are well known by the man skilled in the art. Briefly speaking, multipath arrivals at the searcher manifest themselves as correlation peaks occuring at different times. A peak's magnitude is proportional to the envelope of the path signal, and the time of each peak, relative to the first arrival, gives a measurement of the path's delay. The delays information delivered by the searcher is passed to a rake receiver management unit or control means, CM.

The Rake receiver RR comprises also a time aligning and descrambling unit DSU connected to the output of the matched filter MF. A despreading and combining unit DPRCU is connected to the output of the DSU unit as well as to the output of a channel estimator CHES which estimates for each path its corresponding impulse response. The structure and the operation of such a channel estimator are also well-known by the man skilled in the art.

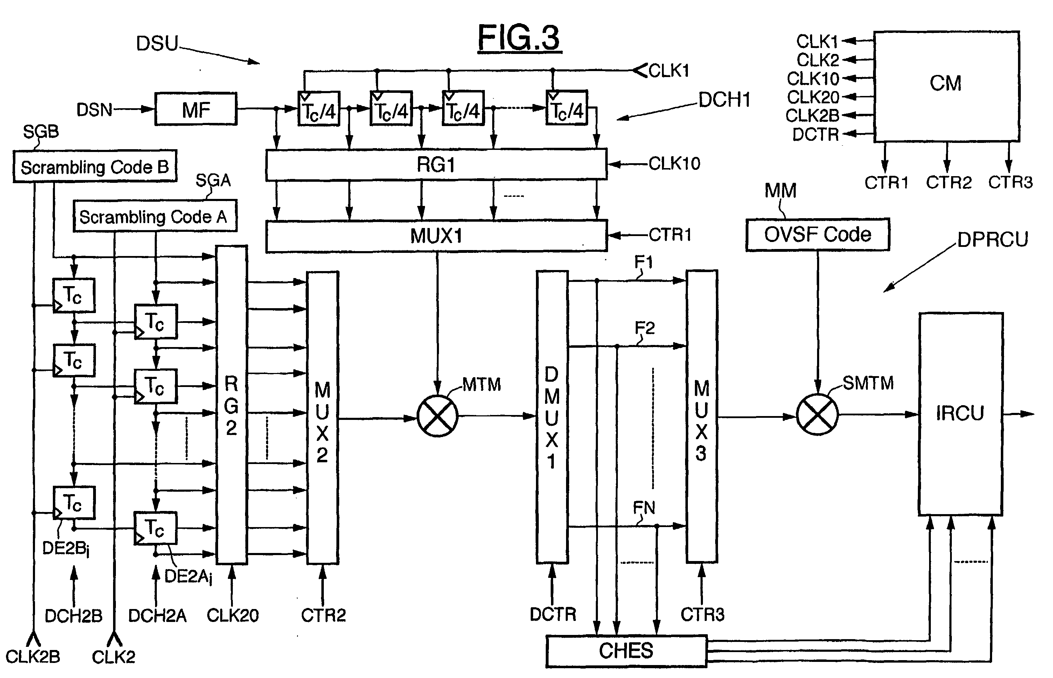

Referring now to figure 3, the time-aligning and descrambling unit DSU comprises a first delay chain DCH1 connected to the output of the matched filter MF.

This first delay chain DCH1 is composed of Ns first delay elements $DE1_i$, each of which having an elementary delay value of Tc/Ns, and clocked by a first clock signal CLK1 having a period of Tc/Ns. Each first delay element can be for example a flip-flop clocked by the signal CLK1. It would be also possible to realize the first delay chain by a shift register or a FIFO memory clocked by the signal CLK1.

On Figure 3, the arrows are in fact double arrows for taking into account the two streams I and Q. For that reason, the multiplication means, which will be described in detail thereafter, are in fact complex multiplication means. However, for simplification reasons, the description of the structure and the operation thereof will be made considering in general one stream.

The minimum number of first delay element $DE1_i$ is Ns, but is preferably at least 2Ns. For example, for an oversampling factor Ns equal to 4, the number of element $DE1_i$ should be around 10, and the size of each delay element $DE1_i$ is twice the resolution of the A/D convertor (two because of the two streams I and Q). The first clock signal CLK1 can be in fact the sampling clock of the A/D convertors.

The respective inputs and outputs of the first delay elements $DE1_i$ are connected to a first register RG1 which is clocked with the first register clock signal CLK10 having a period of Tc. In other words, the clock rate of signal CLK10 is the chip rate.

The outputs of the first register RG1 are connected to the inputs of a first multiplexer MUX1 which is controlled by successive first control signals CTRI. In this embodiment, since the main multiplication means MTM comprise only one complex multiplier, the control means CM respectively successively deliver the first control signals CTR1 which are associated to the corresponding paths, at a frequency N/Tc where N is a number of fingers of the Rake receiver.

In other words, the switching rate of multiplexer MUX1 is the chip rate divided by N.

The time-aligning and descrambling unit DSU further comprises a second delay chain DCH2A, which is connected to the output of a scrambling code generator SGA. The DSU unit may comprise several second delay chains respectively associated with several scrambling code generators, each of which being able to generate the scrambling code respectively associated with the several base stations capable of cooperate with the mobile phone. On figure 3, only two second delay chains DCH2A and DCH2B are represented and are connected to two scrambling code generators SGA and SGB.

For simplification reasons, the structure and the operation of only one scrambling code generator and the corresponding second delay chain will be described. The structure and the operation of the other scrambling code generators and corresponding second delay chains are the same.

The length of the second delay chain DCH2A is defined by the maximum delay spread Ds of the multipath transmission channel. This maximum delay spread is predetermined in a worth case and corresponds generally to the greatest possible time delay value of the multipath channel. Such a delay spread may be equal for example to 10 microseconds.

This maximum delay spread Ds defines also the length of the output sequence of the scrambling code generated by the scrambling code generator.

The delay value between two adjacent outputs of said second delay chain is equal to Tc and the second delay chain is provided with (1 + Ds/Tc) outputs.

In the present embodiment, the delay chain DCH2A is composed of Ds/Tc second delay elements $DE2A_i$, each of which having an elementary delay value of Tc, and clocked by a second clock signal CLK2 having a period of Tc.

For example, by analogy with the first delay chain DCH1, each second delay element $DE2A_i$ may be a flip-flop clocked by the second clock signal CLK2 having the period of Tc. This second clock signal CLK2 clocks also the corresponding scrambling code generator SGA.

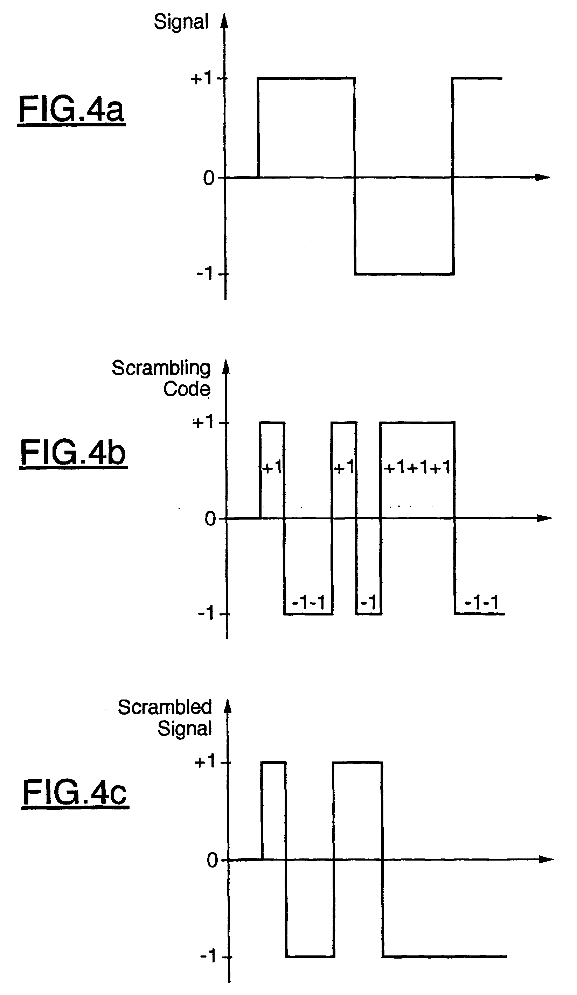

As illustrated on figure 4b, a scrambling code is for example BPSK code which can be defined by only one bit. With such a scrambling code, the scrambled signal (resp. descrambled signal), obtained by multiplying the scrambling code with the initial signal (resp. scrambled signal) illustrated on figure 4a, is illustrated on figure 4c.

Because the scrambling code can be defined by only one bit, the size of each of second delay element $DE2A_i$ is only one bit (in fact two bits for taking into account the two streams I and Q).

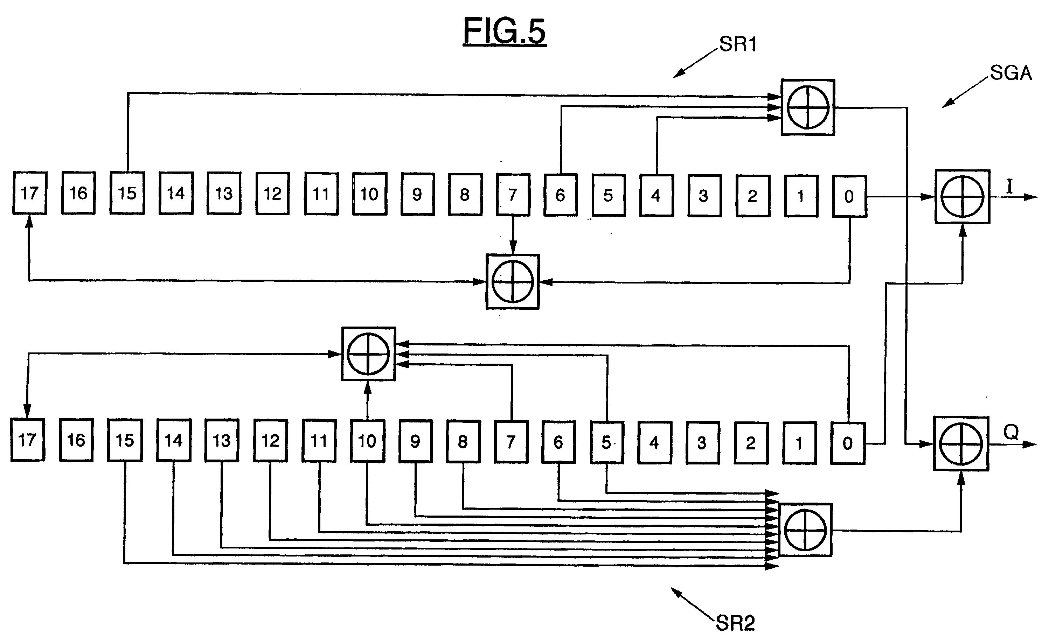

An embodiment of a scrambling code generator is illustrated in more details on figure 5. On this figure, a generator SGA comprises two parallel shift registers SR1 and SR2 having feedback loops included and respectively clocked by the second clock signal CLK2.

Such a generator SGA can generate several scrambling code sequences identified respectively by a scrambling code number n. The scrambling code sequences are constructed by combining two real sequences into a complex sequence. Each of the two real sequences are constructed as the position wise modulo 2 sum of 38400 chip segments of two binary m-sequences generated by means of two generator polynomials of degree 18. The resulting sequences thus constitute segments of a set of Gold sequences. The scrambling codes are repeated for every 10 ms radio frame. Let x and y be the two sequences respectively. The x sequence is constructed using the primitive polynomial $1+X^7+X^{18}$. The y sequence is constructed by using the polynomial $1+X^5+X^7+X^{10}+X^{18}$.

The sequence depending on the chosen scrambling code number n is denoted $z_n$. Furthermore, let x(i), y(i) and $z_n$(i) denote the i:th symbol of the sequence x, y and $z_n$ respectively.

The m-sequences x and y are constructed as:

Initial conditions:

x is constructed with x(0)=1 and x(1)=x(2)=... =x(17)=0 y(0)=y(1)=... =y(17)=1

Recursive definition of subsequent symbols:

$$x(i+18)=x(i+7)+x(i) \text{ modulo } 2, i= 0,....,2^{18}-20.$$

$$y(i+18)=y(i+10)+y(i+7)+y(i+5)+y(i) \text{ modulo } 2, i= 0,..,2^{18}-20.$$

The n:th Gold code sequence $z_n$, n= 0,1....,$2^{18}$-2, is then defined as:

$$z_n(i)=x((i+n) \text{ modulo } (2^{18}-1))+y(i) \text{ modulo } 2, i= 0,....,2^{18}-2.$$

These binary sequences are converted to real valued sequences $Z_n$ by the following transformation:

$$Z_n(i) = +1 \text{ if } z_n(i)=0 \text{ for } i= 0,....,2^{18}-2.$$

$$Z_n(i) = -1 \text{ if } z_n(i)=1 \text{ for } i= 0,....,2^{18}-2.$$

Finally, the n:th complex scrambling code sequence $S_{dl,n}$ is defined as:

$$S_{dl,n}(i)-Z_n(i)+jZ_n((i+131072) \text{modulo}(2^{18}-1)), i=0,..,38399.$$

In operation, a cellular mobile phone which is located within a cell served by a base station, identifies the scrambling code number of this base station during initialization of the phone. This process, wellknown by the man skilled in the art, is called "initial cell search". After this initial process, the phone knows the scrambling code number of its own base station.

It then decodes an information stream from the base station containing the information about the adjacent cells. This information contains timing information and the used scrambling code number of the base stations corresponding to said adjacent cells. This code numbers permit to generate the corresponding scrambling codes. If the mobile phone has to connect to an adjacent cell it uses this scrambling code information to generate the necessary scrambling code for the corresponding new base station.

Turning now again to figure 3, the time aligning and descrambling unit DSU comprises also a second register RG2 connected to the inputs and outputs of the second delay elements DE2A$_i$. Said second register is clocked with a second register clock signal CLK20 having a period of Tc. In other words, the clock rate of signal CLK20 is the chip rate.

Of course, when the DSU unit is provided with several second delay chain DCH2A, DCH2B, all the outputs of all the delay chains are connected to the inputs of the second register RG2.

The outputs of the second register RG2 are connected to the input of a second multiplexer MUX2 successively controlled by second control signals CTR2 delivered by the control means CM. By analogy with said first control signals CTR1, the control means deliver the successive second control signals CTR2 at a frequency of N/Tc. In other words, the switching rate of multiplexer MUX2 is also the chip rate divided by N.

The two outputs of the two multiplexer MUX1 and MUX2 are connected to the two inputs of the complex multiplier MTM.

The control means CM, which generate and deliver all the several clock and control signals are for example implemented by software within a digital signal processor.

In operation, as explained above, the base station transmits the information related to its scrambling, code and this information is delivered to the control means in order to initiate the Gold code sequence generated by the generator SGA accordingly.

Further, by using a pilot signal emitted by the base station, the searcher determines all the time delay values $\tau_i$ of the paths of the multipath channel. This time delay values $\tau_i$ are delivered to the control means which control the two multiplexers MUX1, MUX2 in order to multiply the delayed version of the received signal with the corresponding phase of the corresponding scrambling code. And, during one chip period, for each path n(n = 1...N) to be processed, one multiplication is performed.

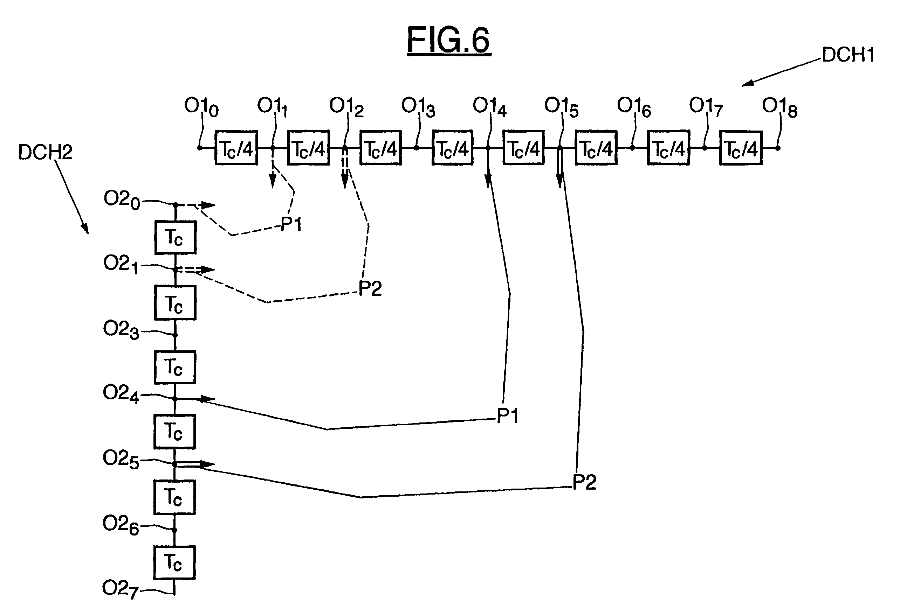

An example of control of the two multiplexer MUX1 and MUX2 is illustrated on figure 6. In figure 6, it is assumed that the path P1 has a time delay value $\tau_1$ equal to Tc/4 whereas the path P2 has a time delay value $\tau_2$ equal to 3Tc/2.

On figure 6, the first delay chain DCH1 has 8 first delay elements and accordingly, 9 first outputs $O1_0$-$O1_8$.

The second delay chain DCH2 has for example 7 second delay elements and 8 second outputs $O2_0$-$O2_7$.

Taking into account the time delay values of path P1 and path P2, the control means can select successively first output $O1_1$ and second output $O2_0$ for the path P1, and first output $O1_2$ and second output $O2_1$ for the path P2 as indicated in figure 6 with the doted arrows.

However, another solution consists in considering path P1 which has for example the smallest time delay value, as a reference path. In such a case, the control means can select one specific first output and one specific second output for path P1. Generally, it is preferable to choose as specific outputs, those which are around the middle of the corresponding delay chains (as for example first output $O1_4$ and second output $O2_4$).

In such a case, the other selected outputs associated to the other paths are determined in relation to these specific outputs $O1_4$ and $O2_4$. In the present example, the control means will accordingly select the first output $O1_5$ and the second output $O2_5$ for the path P2.

Of course, such a solution is possible if the difference between the greatest time delay value and the smallest time delay value among all the time delay value of the paths, is within the time window of the Rake receiver, defined in particular by the length of the second delay chain DCH2.

And, such a solution permits to easily deal with eventual modification of the time delay values of the path during the transmission. In particular, if some time delay values become smaller than the smallest time delay value associated with path P1 (corresponding in fact to "negative" time delay values), the control means could thus select for example one of the output $O1_0$-$O1_3$ or one of the output $O2_0$-$O2_3$.

Another interesting feature of the invention resides in the fact that the scrambling code generator is phase controllable. More precisely, the phase of the scrambling code can be delayed or enhanced by controlling the input clock of the generator. This permits also to flexibly adapt the receiver time window during the transmission if for example one time delay value cannot be obtained by selecting one of the second output $O2_i$. In such a case, the phase of the generator is delayed or enhanced in order to adapt again the window of the time delay values with the actual length of the second delay chain.

The further processing of the descrambled paths is done by demultiplexing the multiplication results for each path into the N fingers of the Rake receiver. For achieving this result, the output module of the time-aligning and descrambling unit comprises (figure 3) a demultiplexer DMUX1 controlled by a demultiplexer control signal DCTR at a frequency of N/Tc. In other words, the switching rate of the demultiplexer is again the chip rate divided by N.

The processing means of the Rake receiver further comprises a despreading and combining unit DPRCU connected to the output module of the time aligning and descrambling unit.

The despreading and combining unit DPRCU comprises a storage means MM for example, a register or memory, for storing said orthogonal code (OVSF code) of the phone. Supplementary multiplication means SMTM are also provided and connected to the main multiplication means MTM through the demultiplexer DMUX1 and another multiplexer MUX3. This multiplexer MUX3 is controlled by a control signal CTR3 at the frequency of N/Tc, i.e. with a switching rate equal to the chip rate divided by N.

With such a switching rate, the supplementary multiplication means SMTM comprises only one complex multiplier, despreading the different signals by a multiplication with the OVSF code.

The despreading and combining unit DPRCU comprises also a conventional integration and dump (reset) and combining module IRCU, the structure and the operation thereof being well-known by the man skilled in the art.

Of course, such IRCU module comprises at its head a demultiplexer (not shown).

The IRCU module performs, for each path (finger) and successively, an integration in order to transform the chips into symbols. However, these symbols are not coherent since they are delivered with a phase distorsion.

The channel estimation unit CHES extracts the pilot channel or the pilot symbol for each path (finger) F1-FN out of the descrambled data sequence delivered by the demultiplexer DMUX1, and calculates the amplitude and the phase (impulse response) of the channel distorsion for each path. This information is then used by the combining means of the IRCU module for the combining process of the different paths.

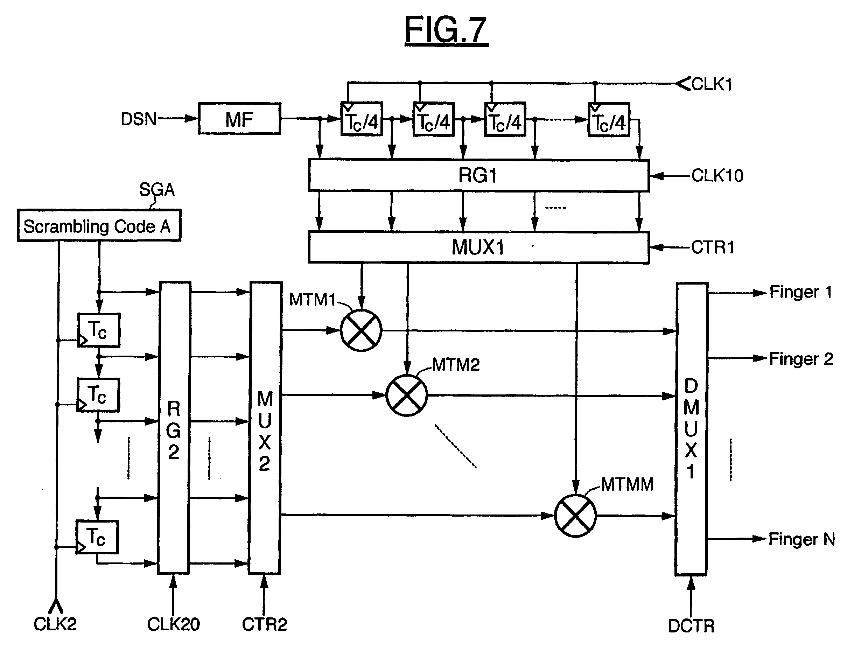

For lower speed requirements for the main multiplication means MTM, several multipliers can be implemented in parallel in order to descramble the several sequences. Such an embodiment of the invention is illustrated on figure 7, in which M multipliers MTM1-MTMM are shown.

In such an embodiment, the first control signals and second control signals CTR1 and CTR2 as well as the control signal DCTR controlling the demultiplexer DMUX1, are successively delivered by the control means at a frequency of N/MTc. In other words, the switching rate of this multiplexer and demultiplexer is reduced to M times the chip rate divided by N.

By analogy, whereas in the embodiment illustrated on figure 3, the despreading operation with the OVSF code is done sequentially for each path (finger), by multiplexing the N data sequences to one multiplication unit, parallel approaches are possible in order to reduce the speed requirements for the supplementary multiplication unit SMTM.

In addition to the normal descrambling operation, it is possible to use the same structure for tracking measurements or for search operations. In other words, the architecture of the Rake receiver described above can be used for tracking operation or for search operations (e.g. cell search in UTRA FDD, search operation in IS95 or CDMA 2000) by controlling the multiplexing and demultiplexing unit accordingly.

At last, the Rake receiver according to the invention may be incorporated in any digital information receiving device for a CDMA system, as for example a base station.

**Claims**

1. A digital N-finger Rake receiver for a CDMA system, comprising

   input means (MF) for receiving a digital scrambled and spreaded signal (DSN) constituted of chips having a duration Tc, oversampled with an oversampling factor Ns , and including delayed versions of at least one initial signal scrambled with at least one scrambling code, spreaded with at least one orthogonal code and transmitted by at least one emitter (BS1) on a multipath transmission channel having a predetermined maximum delay spread Ds,

   estimation means (SH) connected to the input means for estimating the number of paths of the channel, and their different time delay values, and

   processing means for time aligning and descrambling, despreading, combining said delayed versions and delivering the data stream contained in the initial signal, **characterized by** the fact that the processing means comprise a time aligning and descrambling unit (DSU) including

   - a first delay chain (DCH1) connected to the input means and having N1 first outputs, N1 being equal to at least Ns+1, the delay value between two adjacent first outputs being equal to Tc/Ns,
   - a phase controllable scrambling code generator (SGA) for generating the scrambling code of the initial signal,
   - a second delay chain (DCH2A) connected to the output of the scrambling code generator and having 1+ Ds/Tc second outputs, the delay value between two adjacent second outputs being equal to Tc,
   - first controllable selection means (MUX1) for selecting, for each path, one of the first outputs in response to a first control signal (CTR1),
   - second controllable selection means (MUX2) for selecting, for each path, one of the second outputs in response to a second control signal (CTR2),
   - an output module including main multiplication means (MTM) for multiplying, for each path, the elementary signal present at the selected first output with the elementary signal present at the selected second output, and
   - control means (CM) for delivering said first and second control signals for each path according to the time delay value of said considered path.

2. Receiver according to claim 1, **characterized by** the fact that N1 is equal to 2Ns+1.

3. Receiver according to claim 2, **characterized by** the fact that said control means (CM) determine the difference between the greatest time delay value and the smallest time delay value among all the time delay values of the actual paths, by the fact that the path associated with the smallest time delay value is considered as a reference path, by the fact that said control means (CM) are adapted to select for this reference path, one specific first output of the first chain and one specific second output of the second chain,depending on said difference, and by the fact that the other selected first and second outputs associated to the other actual paths are determined in relation to said first and second specific outputs.

4. Receiver according to any one of the preceedings claims, **characterized by** the fact that the first delay chain is a chain composed of N1-1 first delay elements (DE1), each of which having an elementary delay value of Tc/Ns, clocked by a first clock signal( CLK1) having a period of Tc/Ns, and by the fact that the second delay chain is a chain composed of Ds/Tc second delay elements (DE2A), each of which having an elementary delay value of Tc, clocked by a second clock signal (CLK2) having a period of Tc.

5. Receiver according to any one of the preceedings claims, **characterized by** the fact that said control means are adapted to respectively successively deliver the first and second control signals (CTR1, CTR2) associated to the corresponding paths at a frequency of N/Tc,

   by the fact that the first controllable selection means comprises a first register (RG1) connected to said first outputs of the first delay chain and clocked with a first register clock signal (CLK10) having a period of Tc, and a first multiplexer (MUX1) connected between the first register and one input of the main multiplication means (MTM), and successively controlled by said first control signals (CTR1),
by the fact that the second controllable selection means comprises a second register (RG2) connected to said second outputs and clocked with a second register clock signal (CLK20) having a period of Tc, and a second multiplexer (MUX2) connected between the second register and another input of the main multiplication means (MTM), and successively controlled by said second control signals (CTR2),
by the fact that the main multiplication means (MTM) comprises a single multiplier,
and by the fact that the output module further comprises a demultiplexer (DMUX1) connected to the output of the main multiplication means (MTM), having N outputs and controlled by a demultiplexer control signal (DCTR) at a frequency of N/Tc.

6.  Receiver according to any one of the claims 1 to 4, **characterized by** the fact that said control means are adapted to respectively successively deliver the first and second control signals (CTR1, CTR2) associated to the corresponding actual paths at a frequency of N/MTc,

by the fact that the first controllable selection means comprises a first register (RG1) connected to said first outputs and clocked with a first register clock signal having a period of Tc, and a first multiplexer (MUX1) connected between the first register and one input of the main multiplication means, and successively controlled by said first control signals,
by the fact that the second controllable selection means comprises a second register (RG2) connected to said second outputs and clocked with a second register clock signal having a period of Tc, and a second multiplexer (MUX2) connected between the second register and another input of the main multiplication means, and successively controlled by said second control signals,
by the fact that the main multiplication means comprises M parallel multipliers (MTM1, MTMM),
and by the fact that the output module further comprises a demultiplexer (DMUX1) connected to the output of the main multiplication means, having N outputs and controlled by a demultiplexer control signal at a frequency of N/MTc.

7.  Receiver according to any one of the preceedings claims, **characterized by** the fact that the time aligning and descrambling unit (DSU) comprises different scrambling code generators and different second delay chains respectively receiving different scrambling codes, each second delay chain having 1+ Ds/Tc second outputs and a delay value between two adjacent second outputs equal to Tc.

8.  Receiver according to any one of the preceeding claims, **characterized by** the fact that the estimation means (CHES) are further adapted to estimate the impulse response of each actual path, by the fact that the processing means further comprise a despreading and combining unit (DPRCU) connected to the ouput module of the time aligning and descrambling unit (DSU) and to the estimation means, (CHES) and by the fact that said despreading and combining unit comprises a storage means (MM) for storing said orthogonal code (OVSF), and supplementary multiplication means (SMTM) connected to the main multiplication means (MTM) and adapted for multiplying the signals delivered by the output module of the time aligning and descrambling unit, with said orthogonal code (OVSF).

9.  Digital information receiving device, in particular a cellular mobile phone, **characterized by** the fact that it incorporates a Rake receiver as defined in any one of the preceeding claims.

**Patentansprüche**

1.  Digitaler N-Finger-RAKE-Empfänger für ein CDMA-System mit einer Eingangseinrichtung (MF) zum Empfang eines digital verwürfelten und gespreizten Signals (DSN), welches aus Chips besteht, die eine Dauer von Tc besitzen, eine Überabtastung mit einem Überabtastungsfaktor Ns erfahren haben und verzögerte Versionen zumindest eines Ausgangssignals enthalten, welches mit zumindest einem Verwürfelungscode verwürfelt, mit zumindest einem Orthogonalcode gespreizt und durch zumindest eine Sendeeinrichtung (BS1) in einem Multipfad-Übertragungskanal übertragen ist, der eine bestimmte maximale Verzögerungsspreizung Ds aufweist, mit Schätzeinrichtungen (SH), die mit der Eingangseinrichtung zur Schätzung der Anzahl von Pfaden des Kanals und deren unterschiedlicher Zeitverzögerungswerte verbunden sind,
und mit Verarbeitungseinrichtungen zur Zeitausrichtung und Entwürfelung, zur Entspreizung, zum Kombinieren der genannten verzögerten Versionen und zur Abgabe des in dem Ausgangssignal enthaltenen Datenstromes,

**dadurch gekennzeichnet, dass** die Verarbeitungseinrichtung eine Zeitausrichtungs- und Entwürfelungseinheit (DSU) aufweist, die

- eine erste Verzögerungskette (DCH1), welche mit der Eingangseinrichtung verbunden ist und welche N1 erste Ausgänge aufweist, wobei N1 gleich zumindest Ns+1 ist und wobei der Verzögerungswert zwischen zwei benachbarten ersten Ausgängen gleich Tc/Ns ist,
- einen phasensteuerbaren Verwürfelungscodegenerator (SGA) zur Erzeugung des Verwürfelungscodes des Ausgangssignals,
- eine zweite Verzögerungskette (DCH2A), welche mit dem Ausgang des Verwürfelungscodegenerators verbunden ist und welche 1+Ds/Tc zweite Ausgänge aufweist, wobei der Verzögerungswert zwischen zwei benachbarten zweiten Ausgängen gleich Tc ist,
- eine erste steuerbare Auswahleinrichtung (MUX1) zur Auswahl eines der ersten Ausgänge je Pfad auf ein erstes Steuersignal (CTR1) hin,
- eine zweite steuerbare Auswahleinrichtung (MUX2) zur Auswahl eines der zweiten Ausgänge je Pfad auf ein zweites Steuersignal (CTR2) hin,
- ein Abgabemodul, welches eine Haupt-Multiplikationseinrichtung (MTM) enthält, die je Pfad das am ausgewählten ersten Ausgang vorhandene Grundsignal mit dem am ausgewählten zweiten Ausgang vorhandenen Grundsignal multipliziert,
- und Steuereinrichtungen (CM) zur Abgabe der genannten ersten und zweiten Steuersignale für den jeweiligen Pfad entsprechend dem Zeitverzögerungswert des betreffenden berücksichtigten Pfades enthält.

2. Empfänger nach Anspruch 1, **dadurch gekennzeichnet, dass** N1 gleich 2Ns+1 ist.

3. Empfänger nach Anspruch 2, **dadurch gekennzeichnet, dass** die genannten Steuereinrichtungen (CM) die Differenz zwischen dem größten Zeitverzögerungswert und dem kleinsten Zeitverzögerungswert unter sämtlichen Zeitverzögerungswerten der tatsächlichen Pfade bestimmen, dass der dem kleinsten Zeitverzögerungswert zugehörige Pfad als Referenzpfad berücksichtigt wird,
dass die genannten Steuereinrichtungen (CM) für diesen Referenzpfad einen bestimmten ersten Ausgang der ersten Kette und einen bestimmten zweiten Ausgang der zweiten Kette in Abhängigkeit von der betreffenden Differenz auszuwählen imstande sind
und dass die den anderen tatsächlichen Pfaden zugehörigen anderen ausgewählten ersten und zweiten Ausgänge in Bezug auf die genannten ersten und zweiten bestimmten Ausgänge bestimmt sind.

4. Empfänger nach einem der vorhergehenden Ansprüche,
**dadurch gekennzeichnet, dass** die erste Verzögerungskette eine aus N1-1 ersten Verzögerungselementen (DE1) bestehende Kette ist,
dass jedes der betreffenden ersten Verzögerungselemente einen Grundverzögerungswert von Tc/Ns aufweist und durch ein erstes Taktsignal (CLK1) mit einer Periode von Tc/Ns taktgesteuert ist,
dass die zweite Verzögerungskette eine aus Ds/Tc zweiten Verzögerungselementen (DE2A) bestehende Kette ist
und dass jedes der betreffenden zweiten Verzögerungselemente einen Grundverzögerungswert von Tc aufweist und durch ein zweites Taktsignal (SLK2) mit einer Periode von Tc taktgesteuert ist.

5. Empfänger nach einem der vorhergehenden Ansprüche,
**dadurch gekennzeichnet, dass** die Steuereinrichtungenen jeweils aufeinanderfolgend die den entsprechenden Pfaden zugehörigen ersten und zweiten Steuersignale (CTR1, CTR2) mit einer Frequenz von N/Tc abzugeben imstande sind, dass die erste steuerbare Auswahleinrichtung ein erstes Register (RG1), welches mit den genannten ersten Ausgängen der ersten Verzögerungskette verbunden ist und welches mit einem ersten Registertaktsignal (CLK10) taktgesteuert ist, das eine Periode von Tc besitzt, und einen ersten Multiplexer (MUX1) aufweist, der zwischen dem ersten Register und einem Eingang der Haupt-Multiplikationseinrichtung (MTM) angeschlossen ist und der sukzessiv durch die genannten ersten Steuersignale (CTR1) gesteuert ist,
dass die zweite steuerbare Auswahleinrichtung ein zweites Register (RG2), welches mit den genannten zweiten Ausgängen verbunden ist und welches mit einem zweiten Registertaktsignal (CLK20) taktgesteuert ist, das eine Periode von Tc besitzt, und einen zweiten Multiplexer (MUX2) aufweist, der zwischen dem zweiten Register und einem weiteren Eingang der Haupt-Multiplikationseinrichtung (MTM) angeschlossen ist und sukzessiv durch die genannten zweiten Steuersignale (CTR2) gesteuert ist,
dass die Haupt-Multiplikationseinrichtung (MTM) eine einzige Multipliziereinrichtung aufweist
und dass das Abgabemodul ferner einen mit dem Ausgang der Haupt-Multiplikationseinrichtung (MTM) verbundenen Demultiplexer (DMUX1) enthält, der N Ausgänge aufweist und der durch ein Demultiplexer-Steuersignal (DCTR) mit einer Frequenz von (N/Tc) gesteuert ist.

**6.** Empfänger nach einem der Ansprüche 1 bis 4, **dadurch gekennzeichnet, dass** die genannten Steuereinrichtungen die den entsprechenden tatsächlichen Pfaden zugehörigen ersten und zweiten Steuersignale (CTR1, CTR2) mit einer Frequenz von N/MTc jeweils sukzessiv abzugeben imstande sind,

dass die erste steuerbare Auswahleinrichtung ein erstes Register (RG1), welches mit den genannten ersten Ausgängen verbunden und mit einem ersten Registertaktsignal taktgesteuert ist, das eine Periode von Tc besitzt, und einen ersten Multiplexer (MUX1) aufweist, der zwischen dem ersten Register und einem Eingang der Haupt-Multiplikationseinrichtung angeschlossen ist und der durch die genannten ersten Steuersignale sukzessiv gesteuert ist,

dass die zweite steuerbare Auswahleinrichtung ein zweites Register (RG2), welches mit den genannten zweiten Ausgängen verbunden und mit einem zweiten Registertaktsignal taktgesteuert ist, das eine Periode von Tc besitzt, und einen zweiten Multiplexer (MUX2) aufweist, der zwischen dem zweiten Register und einem weiteren Eingang der Haupt-Multiplikationseinrichtung angeschlossen ist und der durch die genannten zweiten Steuersignale sukzessiv gesteuert ist,

dass die Haupt-Multiplikationseinrichtung M Parallel-Multipliziereinrichtungen (MTM1, MTMM) aufweist

und dass das Abgabemodul ferner einen mit dem Ausgang der Haupt-Multiplikationseinrichtung verbundenen Demultiplexer (DMUX1) aufweist, der N Ausgänge aufweist und der durch ein Demultiplexer-Steuersignal mit einer Frequenz von N/MTc gesteuert ist.

**7.** Empfänger nach einem der vorhergehenden Ansprüche,
**dadurch gekennzeichnet, dass** die Zeitausrichtungs- und Entwürfelungseinheit (DSU) unterschiedliche Verwürfelungscodegeneratoren und unterschiedliche zweite Verzögerungsketten aufweist, die unterschiedliche Verwürfelungscodes aufnehmen,

dass jede zweite Verzögerungskette 1+Ds/Tc zweite Ausgänge aufweist

und dass ein Verzögerungswert zwischen zwei benachbarten zweiten Ausgängen gleich Tc ist.

**8.** Empfänger nach einem der vorhergehenden Ansprüche,
**dadurch gekennzeichnet, dass** die Schätzeinrichtungen (CHES) ferner die Impulsantwort jedes tatsächlichen Pfades zu schätzen imstande sind,

dass die Verarbeitungseinrichtungen ferner eine Entspreizungs- und Kombinationseinheit (DPRCU) aufweisen, die mit dem Abgabemodul der Zeitausrichtungs- und Entwürfelungseinheit (DSU) und den Schätzeinrichtungen (CHES) verbunden ist,

und dass die betreffende Entspreizungs- und Kombinationseinheit eine Speichereinrichtung (MM) zur Speicherung des genannten Orthogonal-Codes (OVSF) und eine zusätzliche Multiplikationseinrichtung (SMTM) aufweist, die mit der Haupt-Multiplikationseinrichtung (MTM) verbunden ist und die die durch das Abgabemodul der Zeitausrichtungs- und Entwürfelungseinheit abgegebenen Signale mit dem genannten Orthogonal-Code (OVSF) zu multiplizieren imstande ist.

**9.** Digitale Informationsempfangsvorrichtung, insbesondere zellulares Mobiltelefon, **dadurch gekennzeichnet, dass** sie einen RAKE-Empfänger gemäß einem der vorhergehenden Ansprüche enthält.

**Revendications**

**1.** Récepteur numérique de type râteau à N doigts pour système CDMA, comprenant :

un moyen d'entrée (MF) pour recevoir un signal numérique brouillé et étalé (DSN) constitué de fragments ayant une durée Tc, suréchantillonné avec un facteur de suréchantillonnage Ns, et comportant des versions retardées d'au moins un signal initial brouillé avec au moins un code de brouillage, étalé avec au moins un code orthogonal et transmis par au moins un émetteur (BS1) sur un canal de transmission multivoie ayant un étalement à retard maximum prédéterminé Ds,

un moyen d'estimation (SH) connecté au moyen d'entrée pour estimer le nombre de voies du canal, et leurs différentes valeurs de retard, et

un moyen de traitement pour aligner temporellement et désembrouiller, désétaler, combiner lesdites versions retardées et délivrer le flux de données contenu dans le signal initial, **caractérisé en ce que** le moyen de traitement comprend une unité d'alignement temporel et de désembrouillage (DSU) comprenant

- une première chaîne à retard (DCH1) reliée au moyen d'entrée et ayant N1 premières sorties, N1 étant supérieur ou égal à Ns+1, la valeur de retard entre deux premières sorties adjacentes étant égale à Tc/Ns,
- un générateur (SGA) de code de brouillage pouvant être commandé en phase pour produire le code de brouillage du signal initial,
- une deuxième chaîne à retard (DCH2A) reliée à la sortie du générateur de code de brouillage et ayant 1 + Ds/Tc deuxièmes sorties, la valeur de retard entre deux deuxièmes sorties adjacentes étant égale à Tc,
- un premier moyen de sélection (MUX1) pouvant être commandé, pour sélectionner, pour chaque voie, l'une des premières sorties en réponse à un premier signal de commande (CTR1),
- un deuxième moyen de sélection (MUX2) pouvant être commandé, pour sélectionner, pour chaque voie, l'une des deuxièmes sorties en réponse à un deuxième signal de commande (CTR2),
- un module de sortie comprenant un moyen de multiplication principal (MTM) pour multiplier, pour chaque voie, le signal élémentaire présent à la première sortie sélectionnée par le signal élémentaire présent à la deuxième sortie sélectionnée, et
- un moyen de commande (CM) pour délivrer lesdits premier et deuxième signaux de commande pour chaque voie selon la valeur de retard de ladite voie considérée.

2. Récepteur selon la revendication 1, **caractérisé par le fait que** N1 est égal à 2Ns+1.

3. Récepteur selon la revendication 2, **caractérisé par le fait que** ledit moyen de commande (CM) détermine la différence entre la plus grande valeur de retard et la plus petite valeur de retard parmi toutes les valeurs de retard des voies actuelles, **par le fait que** la voie associée à la plus petite valeur de retard est considérée comme étant une voie de référence, **par le fait que** ledit moyen de commande (CM) est adapté pour sélectionner pour cette voie de référence une première sortie spécifique de la première chaîne et une deuxième sortie spécifique de la deuxième chaîne, en fonction de ladite différence, et **par le fait que** les autres première et deuxième sorties sélectionnées associées aux autres voies actuelles sont déterminées par rapport auxdites première et deuxième sorties spécifiques.

4. Récepteur selon l'une quelconque des revendications précédentes, **caractérisé par le fait que** la première chaîne de retard est une chaîne composée de N1-1 premiers éléments de retard (DE1), chacun d'entre eux ayant une valeur de retard élémentaire Tc/Ns, cadencés par un premier signal d'horloge (CLK1) ayant une période de Tc/Ns, et **par le fait que** la deuxième chaîne de retard est une chaîne composée de Ds/Tc deuxièmes éléments de retard (DE2A), chacun d'entre eux ayant une valeur de retard élémentaire Tc, cadencés par un deuxième signal d'horloge (CLK2) ayant une période de Tc.

5. Récepteur selon l'une quelconque des revendications précédentes, **caractérisé par le fait que** ledit moyen de commande est adapté pour délivrer respectivement et successivement les premier et deuxième signaux de commande (CTR1, CTR2) associés aux voies correspondantes à une fréquence de N/Tc, **par le fait que** le premier moyen de sélection pouvant être commandé comprend un premier registre (RG1) relié auxdites premières sorties de la première chaîne à retard et cadencé par un premier signal d'horloge de registre (CLK10) ayant une période de Tc, et un premier multiplexeur (MUX1) connecté entre le premier registre et une entrée du moyen de multiplication principal (MTM), et commandés successivement par lesdits premiers signaux de commande (CTR1), **par le fait que** le deuxième moyen de sélection pouvant être commandé comprend un deuxième registre (RG2) relié auxdites deuxièmes sorties et cadencé par un deuxième signal d'horloge de registre (CLK20) ayant une période de Tc, et un deuxième multiplexeur (MUX2) connecté entre le deuxième registre et une autre entrée du moyen de multiplication principal (MTM), et commandés successivement par lesdits deuxièmes signaux de commande (CTR2), **par le fait que** le moyen de multiplication principal (MTM) comprend un seul multiplicateur, et **par le fait que** le module de sortie comprend en outre un démultiplexeur (DMUX1) relié à la sortie du moyen de multiplication principal (MTM), ayant N sorties et commandé par un signal de commande de démultiplexeur (DCTR) à une fréquence de N/Tc.

6. Récepteur selon l'une quelconque des revendications 1 à 4, **caractérisé par le fait que** ledit moyen de commande est adapté pour délivrer respectivement et successivement les premier et deuxième signaux de commande (CTR1, CTR2) associés aux voies actuelles correspondantes à une fréquence de N/MTc, **par le fait que** le premier moyen de sélection pouvant être commandé comprend un premier registre (RG1) relié auxdites premières sorties et cadencé par un premier signal d'horloge de registre ayant une période de Tc, et un premier multiplexeur (MUX1) connecté entre le premier registre et une entrée du moyen de multiplication principal, et commandés successivement par lesdits premiers signaux de commande,

**par le fait que** le deuxième moyen de sélection pouvant être commandé comprend un deuxième registre (RG2) relié auxdites deuxièmes sorties et cadencé par un deuxième signal d'horloge de registre ayant une période de Tc, et un deuxième multiplexeur (MUX2) connecté entre le deuxième registre et une autre entrée du moyen de multiplication principal, et commandés successivement par lesdits deuxièmes signaux de commande,

**par le fait que** le moyen de multiplication principal comprend M multiplicateurs parallèles (MTM1, MTMM),

et **par le fait que** le module de sortie comprend en outre un démultiplexeur (DMUX1) relié à la sortie du moyen de multiplication principal, ayant N sorties et commandé par un signal de commande de démultiplexeur à une fréquence de N/MTc.

7. Récepteur selon l'une quelconque des revendications précédentes, **caractérisé par le fait que** l'unité d'alignement temporel et de désembrouillage (DSU) comprend différents générateurs de code de brouillage et différentes deuxièmes chaînes à retard recevant respectivement différents codes de brouillage, chaque deuxième chaîne à retard ayant 1 + Ds/Tc deuxièmes sorties et une valeur de retard entre deux deuxièmes sorties adjacentes égale à Tc.

8. Récepteur selon l'une quelconque des revendications précédentes, **caractérisé par le fait que** le moyen d'estimation (CHES) est en outre adapté pour estimer la réponse impulsionnelle de chaque voie actuelle, **par le fait que** le moyen de traitement comprend en outre une unité de désétalement et de combinaison (DPRCU) reliée au module de sortie de l'unité d'alignement temporel et de désembrouillage (DSU) et au moyen d'estimation, (CHES) et **par le fait que** ladite unité de désétalement et de combinaison comprend un moyen de stockage (MM) pour stocker ledit code orthogonal (OVSF), et des moyens de multiplication supplémentaires (SMTM) reliés au moyen de multiplication principal (MTM) et adaptés pour multiplier les signaux délivrés par le module de sortie de l'unité d'alignement temporel et de désembrouillage par ledit code orthogonal (OVSF).

9. Appareil de réception d'information numérique, en particulier téléphone mobile cellulaire, **caractérisé par le fait qu'**il comporte un récepteur de type râteau conforme à l'une quelconque des revendications précédentes.

FIG.1

MPC

ISG

ANT2

P1 P2 P3

TP

ERF

ETN

LNA

A/D    I    DSN

A/D    Q    DSN

RR

MP    SD

OL(0°-90°)

PLL

ANT1

BS1

BS2

EP 1 175 019 B1

15

FIG.2

## FIG.3

EP 1 175 019 B1

FIG.4a

FIG.4b

FIG.4c

FIG.5

## FIG.6

EP 1 175 019 B1

# FIG.7

EP 1 175 019 B1